# EUROPÄISCHE PATENTANMELDUNG

(11) **EP 4 147 937 A1**
(43) Veröffentlichungstag der Anmeldung: **15.03.2023**
(21) Anmeldenummer: 22191705.7
(22) Anmeldetag: 23.08.2022
(51) Int. Cl.: B61B 1/00, B65G 63/02, B65G 69/22

(54) **VERFAHREN ZUM UMSCHLAGEN VON LADUNGSTRÄGERN ZWISCHEN STRASSE UND SCHIENE**

(30) Priorität: 10.09.2021 DE 102021123508
(71) Anmelder: Deutsche Post AG, 53113 Bonn (DE)
(72) Erfinder: SALOMON, Jörg, 53113 Bonn (DE)
(74) Vertreter: Cohausz & Florack

(57) **Zusammenfassung**

Beschrieben und dargestellt ist ein Verfahren zum Umschlagen von Ladungsträgern (1) zwischen Straße (2) und Schiene (3), mit einer Beladestation (4,17,18,20) umfassend wenigstens eine Plattform (5) zum Zwischenspeichern von einer Reihe von Ladungsträgern (1) in Längsrichtung (L) der Plattform (5), mit wenigstens einer Straße (2) und wenigstens einem Gleis (7). Um den erforderlichen Zeit- und Logistikaufwand zu senken ist vorgesehen, dass
- der Zug (8) an vorbestimmten Stellen entlang seiner Längserstreckung zur Beladung mit Ladungsträgern (1) vorgesehen ist,
- vor dem Heranfahren des Zugs (8) eine Information über die zur Beladung durch Ladungsträger (1) vorgesehenen Stellen des Zugs (8) mitgeteilt werden,
- eine Mehrzahl von Lastkraftwagen (6) an die Plattform (5) heranfahren und jeweils wenigstens einen Ladungsträger (1) in einer Richtung quer zur Längserstreckung (L) der Plattform (5) an mit den zu beladenden Stellen des Zugs (8) korrespondierende Abschnitte (11) der Plattform (5) übergeben werden,
- die Ladungsträger (1) an den mit den zu beladenden Stellen des Zugs (8) korrespondierenden Abschnitten (11) der Plattform (5) bis zum Heranfahren des Zugs (8) zwischengespeichert werden,
- der Zug (8) neben der Plattform (5) angehalten wird,
- die zwischengespeicherten Ladungsträger (1) in einer Richtung quer zur Längserstreckung (L) der Plattform (5) jeweils an für die Beladung durch Ladungsträger (1) vorgesehene Stellen des Zugs an den angehaltenen Zug (8) übergeben werden.

## Beschreibung

Die Erfindung betrifft ein Verfahren zum Umschlagen von Ladungsträgern, insbesondere Wechselbrücken und ISO-Containern, zwischen Straße und Schiene, mit einer Beladestation umfassend wenigstens eine Plattform zum Zwischenspeichern von einer Reihe von Ladungsträgern in Längsrichtung der Plattform, mit wenigstens einer Straße zum Heranfahren von Lastkraftwagen auf einer Seite der Plattform und wenigstens einem Gleis zum Heranfahren eines Zugs auf der anderen Seite der Plattform.

Es sind bereits unterschiedliche Verfahren zum Umschlagen von Ladungsträgern von der Straße auf die Schiene und zurück bekannt. Dabei handelt es sich bei den Ladungsträgern um solche mit einem Laderaum für darin aufzunehmende Ladung und mehr oder weniger genormten Abmessungen. Besonders weit verbreitet sind in diesem Zusammenhang die sogenannten ISO-Container die auch als Schiffs- oder See-Container bezeichnet werden. Die ISO-Container weisen dabei typischerweise eine Länge von 20 oder 40 Fuß auf. Neben den ISO-Containern werden für den Warentransport an Land ebenfalls häufig sogenannte Wechselaufbauten verwendet, die ähnliche Befestigungsecken in den gleichen Längsabständen wie 20-Fuß-ISO-Container aufweisen, jedoch etwas breiter sind als die ISO-Container, da die Wechselcontainer speziell für die Aufnahme von Europaletten angepasst sind. In selteneren Fällen werden ganze Sattelauflieger als Ladungsträger umgeschlagen.

ISO-Container und Wechselaufbauten können zwar einfach mit Portalkränen umgeschlagen und damit von einem Fahrzeug auf ein anderes Fahrzeug übergeben werden. Dies ist jedoch mit einem erheblichen Zeit- und Logistikaufwand verbunden. Dieser Aufwand ist beim Beladen von Containerschiffen hinzunehmen, für den Umschlag von Ladungsträgern zwischen Straße und Schiene aber mit erheblichen Problemen verbunden. Beim Umschlag zwischen Straße und Schiene sollen nämlich viele Lastkraftwagen und Züge in möglichst kurzer Zeit be- und entladen werden.

Um das Zwischenspeichern von Ladungsträgern in Gänze zu vermeiden, wurde vorgeschlagen, die Ladungsträger direkt von einem Lastkraftwagen auf einen Zug und wieder zurück zu übergeben. Auch dies ist aber mit einem erheblichen Zeit- und Logistikaufwand verbunden. Entsprechende Verfahren sind daher nur für bestimmte Anwendungen zufriedenstellend einzusetzen.

Es sind ferner Plattformen vorgeschlagen worden, auf denen Ladungsträger zwischengespeichert werden können und die zwischen einer Straße und einem Gleis vorgesehen sind. Über die Straße können die Lastkraftwagen zur Übergabe und Übernahme der Ladungsträger herangefahren werden, während über das Gleis zum selben Zweck Züge mit entsprechenden Wagons herangefahren werden können. Die Straße und das Gleis verlaufen dabei abschnittsweise parallel zur Längserstreckung der Plattform. Damit kann das Zwischenstapeln von Ladungsträgern entfallen, das typischerweise beim Einsatz von Portalkränen vorgesehen ist. Allerdings fällt dann auch ein großes Maß an Flexibilität für das Umschlagen von Ladungsträgern weg. Dies lässt sich nur dadurch kompensieren, dass die Ladungsträger "just in time" angeliefert werden oder dass die Ladungsträger auf der Plattform für den anschließenden Weitertransort sortiert werden können. Die Plattformen müssen mithin wenigstens doppelt so breit sein wie die Ladungsträger und die Plattformen müssen über entsprechende Sortiereinrichtungen für die Ladungsträger in der Horizontalen, also in Längserstreckung der Plattform und quer zur Längserstreckung der Plattform, verfügen.

Im Ergebnis sind die Verfahren zum Umschlagen von Ladungsträgern mit einer Beladestation umfassend wenigstens eine Plattform zum Zwischenspeichern von einer Reihe von Ladungsträgern in Längsrichtung der Plattform, mit wenigstens einer Straße zum Heranfahren von Lastkraftwagen auf einer Seite der Plattform und wenigstens einem Gleis zum Heranfahren eines Zugs auf der anderen Seite der Plattform, noch nicht zufriedenstellend, hinsichtlich des erforderlichen Zeit- und Logistikaufwands.

Daher liegt der vorliegenden Erfindung die Aufgabe zugrunde, das Verfahren der eingangs genannten und zuvor näher erläuterten Art derart auszugestalten und weiterzubilden, dass der erforderliche Zeit- und Logistikaufwand gesenkt werden kann.

Diese Aufgabe ist gemäß Anspruch 1 gelöst durch ein Verfahren zum Umschlagen von Ladungsträgern, insbesondere Wechselbrücken und ISO-Containern, zwischen Straße und Schiene, mit einer Beladestation umfassend wenigstens eine Plattform zum Zwischenspeichern von einer Reihe von Ladungsträgern in Längsrichtung der Plattform, mit wenigstens einer Straße zum Heranfahren von Lastkraftwagen auf einer Seite der Plattform und wenigstens einem Gleis zum Heranfahren eines Zugs auf der anderen Seite der Plattform,
- bei dem der Zug an vorbestimmten Stellen entlang seiner Längserstreckung zur Beladung mit Ladungsträgern vorgesehen ist,
- bei dem der Beladestation und/oder einem Bediener der Beladestation vor dem Heranfahren des Zugs eine Information über die zur Beladung durch Ladungsträger vorgesehenen Stellen des Zugs mitgeteilt wird,
- bei dem eine Mehrzahl von Lastkraftwagen nacheinander über die Straße an die Plattform heranfahren und jeweils wenigstens einen Ladungsträger in einer Richtung quer zur Längserstreckung der Plattform an mit den zu beladenden Stellen des Zugs korrespondierende Abschnitte der Plattform übergeben werden,
- bei dem die von den Lastkraftwagen an die Plattform übergebenen Ladungsträger an den mit den zu beladenden Stellen des Zugs korrespondierenden Abschnitten der Plattform bis zum Heranfahren des Zugs zwischengespeichert werden,
- bei dem der Zug an die Plattform herangefahren und neben der Plattform angehalten wird,
- bei dem die zwischengespeicherten Ladungsträger in einer Richtung quer zur Längserstreckung der Plattform jeweils an für die Beladung durch Ladungsträger vorgesehene Stellen des Zugs an den angehaltenen Zug übergeben werden.

Das Beladen eines Zugs ist besonders zweckmäßig möglich, weil bereits vor der Ankunft des Zugs an der wenigstens einen Plattform der Beladestation bekannt ist, an welchen Stellen des Zugs dieser zu beladen ist und welche Ladungsträger für das Beladen des Zugs vorgesehen sind. Dabei kann bereits vor dem Eintreffen des Zugs an der wenigstens einen Plattform feststehen, welcher Ladungsträger an welche Stelle des Zugs geladen wird. Dies kann insgesamt zu einer Vereinfachung der Logistik führen, weil dann immer vorab bekannt ist, welcher Ladungsträger sich wo auf dem Zug befindet. Es ist dann auch lange im Voraus bekannt, an welchen Stellen der Zug in einer Beladestation zu beladen ist, auch wenn der Zug zuvor noch weitere Beladestationen anfährt. Mithin steht gegebenenfalls eine große Zeitspanne für das Anliefern der zu beladenden Ladungsträger zu Verfügung. Das Anliefern und das Übergeben der Ladungsträger an den Zug kann mithin zeitlich deutlich stärker entkoppelt werden, wenn den zu beladenden Stellen des Zugs jeweils vorab bereits genau ein Ladungsträger zugewiesen ist. Zwingend erforderlich ist eine solche Zuweisung aber nicht.

Es wird mithin der Beladestation und/oder dem Bediener der Beladestation mitgeteilt, welche Stellen des Zugs entlang der Längserstreckung des Zugs zur Beladung durch Ladungsträger vorgesehen sind. Aus dieser Information lässt sich ermitteln, an welchen Abschnitten der Plattform in deren Längserstreckung die Ladungsträger zwischengespeichert werden müssen, um nach dem Heranfahren des Zugs an die Plattform in einer Richtung quer zur Längserstreckung der Plattform auf den Zug übergeben werden zu können. Es ist dann weder ein Verschieben der Ladungsträger in der Längsrichtung der Plattform noch ein wiederholtes Rangieren des an die Plattform herangefahrenen Zugs erforderlich. Das Umschlagen der Ladungsträger wird mithin erheblich beschleunigt.

Es kann so auch eine Entkopplung zwischen dem Herantransportieren der Ladungsträger mittels Lastkraftwagen und dem Übernehmen der Ladungsträger durch einen Zug insoweit erreicht werden, als dass eine Mehrzahl von Lastkraftwagen nacheinander Ladungsträger an die Plattform anliefern können. Die Ladungsträger werden dann an in einer Richtung quer zur Längserstreckung der Plattform an Abschnitte der Plattform übergeben, die mit den zu beladenden Stellen des Zugs korrespondieren. Dies kann bedarfsweise lange vor dem Eintreffen des Zugs an der Plattform erfolgen. So müssen die Lastkraftwagen nicht länger als für die eigentliche Übergabe der Ladungsträger an der Plattform verharren, sondern können sogleich für weitere Transportaufgaben eingesetzt werden. Gleiches gilt auch für den Zug, da dieser nicht erst auf die Ankunft der Lastkraftwagen warten muss, von denen Ladungsträger zu übernehmen sind.

Der Zug übernimmt die Ladungsträger zudem sehr zügig, weil diese lediglich in einer Richtung quer zur Plattform von der Plattform an den Zug übergeben werden. Ein Verschieben der Ladungsträger längs der Plattform ist wenigstens im Wesentlichen entbehrlich, wenn die Richtung quer zur Plattform der Richtung senkrecht zur Längserstreckung der Plattform entspricht, was der Einfachheit halber bevorzugt ist. Geringe Abweichungen hiervon sind jedoch denkbar. Der Einfachheit halber ist es ebenfalls bevorzugt, wenn die Ladungsträger in derselben Richtung von der Plattform übernommen werden, in der die Ladungsträger von der Plattform weitergegeben werden.

Die Information über die zur Beladung durch Ladungsträger vorgesehenen Stellen des Zugs kann dabei unterschiedlich ausfallen. Denkbar ist, dass der Zug an einer vorbestimmten Stelle zu halten hat. Diese Stelle kann immer gleich sein oder gegebenenfalls Teil der entsprechenden Information sein. Dann kann ferner angegeben sein, an welchen konkreten Stellen der Plattform die an den Zug zu übergebenden Ladungsträger zu platzieren sind. Wenn der Zug an der vorbestimmten Stelle anhält, kann der Zug die Ladungsträger an den dafür vorgesehenen Stellen auf die Wagons übernehmen. Die betreffende Information über die zur Beladung durch Ladungsträger vorgesehenen Stellen des Zugs kann aber auch lediglich Angaben zu relativen Abständen der zur Beladung vorgesehenen Stellen der Wagons des Zugs enthalten. Es besteht so mithin eine größere Flexibilität hinsichtlich der Positionierung der Ladungsträger auf der Plattform. Wenn der Zug an einer bestimmten dem Zug zugewiesenen Stelle hält, kann der Zug die Ladungsträger an den richtigen Stellen auf die Wagons übernehmen. Ein nachfolgender Zug kann dann bedarfsweise an einer anderen Stelle angehalten werden, um die zu übernehmenden Ladungsträger an den zugewiesenen Stellen des Zugs zu übernehmen. So kann der auf der Plattform zur Verfügung stehende Platz effizient und flexibel ausgenutzt werden.

Dies kann insbesondere dann interessant sein, wenn Ladungsträger zur Weitergabe an einen Zug an die Plattform übergeben werden sollen, bei dem es sich nicht um den als nächsten an die Plattform heranfahrenden Zug handelt, sondern wenigstens den übernächsten an die Plattform heranfahrenden Zug. Insbesondere wenn die Plattform lang genug ist und/oder jeweils nur wenige Ladungsträger auf einen Zug übergeben werden sollen, können auf der Plattform zeitgleich Ladungsträger für unterschiedliche Züge zwischengespeichert werden, ohne dass es hierfür einer Stapelung der Ladungsträger bedarf. Die Stellen, an denen die aufeinanderfolgenden Züge relativ zur Plattform angehalten werden, können so gewählt werden, dass nicht zwei Ladungsträger für unterschiedliche Züge zur Übergabe an demselben Abschnitt der Plattform vorgesehen sind. Dies ist ohne Weiteres möglich, weil stets rechtzeitig bekannt ist, an welchen Stellen der Züge die Ladungsträger an die Züge übergeben werden sollen. Es ist aber der Einfachheit halber auch denkbar, dass die Plattform so lang ausgebildet ist, dass die Länge der Plattform mehreren Zuglängen entspricht. So können unterschiedliche Bereiche der Plattform unterschiedlichen, nacheinander oder zeitgleich an die Plattform heranfahrenden Zügen zugeordnet werden. Die Übergabe der Ladungsträger von der Straße an einen Zug ist dann wenigstens im Wesentlichen unabhängig von der Übergabe der Ladungsträger von der Straße an einen anderen Zug durchführbar. Gleichwohl kann die Übernahme der Ladungsträger von einem Zug unabhängig von der Übernahme der Ladungsträger von einem anderen Zug erfolgen.

Die zuvor beschriebene Beladestation dient wie beschrieben dem Beladen eines Zugs. Dies schließt jedoch nicht aus, dass dieser Zug oder bedarfsweise auch ein nicht zum Beladen vorgesehener Zug an der Plattform der Beladestation einen Ladungsträger entlädt. Der Ladungsträger wird dann bedarfsweise quer zur Längserstreckung der Plattform an diese übergeben. Dort wird der Ladungsträger dann zwischengespeichert und bedarfsweise zu einem späteren Zeitpunkt in einer Richtung quer zur Längserstreckung der Plattform an einen über die Straße an die Plattform herangefahrenen Lastkraftwagen übergeben. Es wäre alternativ oder zusätzlich auch denkbar, dass der Ladungsträger von der Plattform in einer Richtung quer zur Plattform an einen unmittelbar oder lediglich mittelbar nachfolgenden anderen Zug übergeben wird. Wird die Plattform jedoch in denselben Bereichen zum Beladen und zum Entladen von Zügen verwendet, können die zum Beladen eines Zugs vorgesehenen Ladungsträger und die entladenen Ladungsträger oder die zum Entladen vorgesehenen Ladungsträger eines Zugs sich gegenseitig behindern, insbesondere wenn sie zeitgleich denselben Abschnitt der Plattform beanspruchen. Um dies zu vermeiden, ist ein entsprechender Logistik- und Steuerungsaufwand zu betreiben, der jedoch in Kauf genommen werden kann.

Die Verwendung wenigstens einer Plattform für das Umschlagen von Ladungsträgern bietet zudem den Vorteil, dass das Gleis mit einer Oberleitung versehen sein kann. Die Übergabe der Ladungsträger von einer Plattform auf einen Zug in einer Richtung wenigstens im Wesentlichen quer zur Längserstreckung der Plattform lässt sich nämlich in einer Weise bewerkstelligen, bei der eine übermäßige Annäherung von Ladungsträgern an die Oberleitung des entsprechenden Gleises oder gar eine Berührung der Oberleitung durch die Ladungsträger zuverlässig ausgeschlossen werden kann. Dies ist bei dem Einsatz von Portalkränen anstelle von wenigstens einer entsprechenden Plattform typischerweise nicht möglich. Dennoch können auch vorliegend Portalkräne, bedarfsweise zusammen mit der Plattform oder unabhängig von der Plattform für das Umschlagen von Ladungsträgern verwendet werden. Dies gilt insbesondere dann, wenn das wenigstens eine Gleis ohne eine Oberleitung auskommt.

Wenn vorliegend von der Übergabe von Ladungsträgern durch einen Zug die Rede ist, dann ist hier insbesondere gemeint, dass die Ladungsträger an wenigstens einen Wagon des Zugs übergeben werden. Wenn vorliegend von Lastkraftwagen die Rede ist, dann sind all solche Lastkraftwagen gemeint, die wenigstens einen Ladungsträger an die Plattform herantransportieren oder von der Plattform wegtransportieren können. Die Ladungsträger können dabei auch lösbar von einem Anhänger getragen werden oder auch durch einen Anhänger, beispielsweise einen Sattelauflieger, gebildet werden. Wenn vorliegend von einer Längserstreckung der wenigstens einen Plattform, der Straße und/oder des Gleises gesprochen wird, so kann dies bedeuten, dass sich die Plattform, die Straße und/oder das Gleis geradlinig und parallel erstrecken. Es kann aber auch eine gebogene oder gekrümmt Längserstreckung vorgesehen sein, wobei die Plattform, die Straße und das Gleis dann der Einfachheit halber bevorzugt in gleicher Weise oder korrespondierend zueinander gebogen oder gekrümmt sein können.

Vorliegend wird der Begriff des Lastkraftwagens verwendet, wobei dieser jedoch recht breit verstanden werden kann. So kann der Lastkraftwagen den Ladungsträger beispielsweise direkt aufnehmen oder aber einen Anhänger oder Sattelauflieger ziehen, der wenigstens einen Ladungsträger tragen kann. Allgemein wird man unter einem Lastkraftwagen einen solchen verstehen, der von einer Verbrennungsmaschine, typischerweise von einem Dieselmotor oder Gasmotor, angetrieben ist. Der Lastkraftwagen kann vorliegend aber auch als Elektrofahrzeug ausgebildet sein. In einem solchen Fall ist die Erfindung zudem in besonderem Maße vorteilhaft, weil Elektrofahrzeuge eine begrenzte Nutzungsdauer aufweisen, bis die Batterie der Elektrofahrzeuge wieder aufgeladen oder getauscht werden muss. Die verkürzten Umschlagzeiten sind für einen effizienten Einsatz von Lastkraftwagen in Form von Elektrofahrzeugen besonders zweckmäßig. Des Weiteren wird es in vielen Fällen so sein, dass die Lastkraftwagen von einem Fahrer bewegt und an die Plattform herangefahren werden. Dies ist aber nicht zwingend erforderlich. Es ist vielmehr auch denkbar, dass die Lastkraftwagen wenigstens teilweise autonom fahren. Bei einer vollkommen autonomen Betriebsweise kann gänzlich auf einen Fahrer verzichtet werden, während bei teilweise autonomer Betriebsweise des Lastkraftwagens der Fahrer bestimmte Tätigkeiten übernehmen oder kontrollieren muss. So könnte es beispielsweise vorgesehen sein, dass der Fahrer den Lastkraftwagen zur Beladestation fährt. Dort angekommen könnte dann der Lastkraftwagen autonom und damit sehr zuverlässig eine bestimmte Position entlang der Plattform anfahren. An dieser Stelle könnte der Lastkraftwagen dann einen Ladungsträger an einen vorgegebenen Abschnitt der Plattform übergeben oder von einem vorgegebenen Abschnitt der Plattform einen Ladungsträger übernehmen.

Bei einer ersten besonders bevorzugten Ausgestaltung des Verfahrens ist in der Beladestation zu beiden Seiten des Gleises jeweils eine Plattform zum Zwischenspeichern von einer Reihe von Ladungsträgern in Längsrichtung der Plattform vorgesehen. Dies erlaubt es, eine Plattform für das Beladen der Züge und die andere Plattform zum Entladen der Züge zu verwenden. Eine höhere Flexibilität und damit eine höhere Leistungsdichte kann jedoch erzielt werden, wenn beide Plattformen zum Beladen von Zügen und/oder zum Entladen von Zügen genutzt werden. Diese Flexibilität kann zur Erreichung einer hohen Leistungsdichte genutzt werden, weil die Beladestation oder ein Bediener der Beladestation eine Information über die zur Beladung durch Ladungsträger vorgesehenen Stellen erhält. Bedarfsweise kann der Beladestation oder einem Bediener der Beladestation auch eine Information über die Stellen der zur Entladung vorgesehenen Ladungsträger mitgeteilt werden. So können zu jedem Zeitpunkt des Verfahrens den auf der wenigstens einen Plattform zwischenzuspeichernden Ladungsträgern andere Abschnitte zugewiesen werden, so dass es nicht zu einer Kollision oder Behinderung der Ladungsträger untereinander kommen kann.

Besonders zweckmäßig ist es im Übrigen, wenn an den beiden dem Gleis abgewandten Seiten der Plattformen jeweils eine Straße zum Heranfahren von Lastkraftwagen vorgesehen ist. Dann können von Lastkraftwagen in kurzer Zeit sehr viele Ladungsträger zur Weitergabe an wenigstens einen Zug an die Beladestation herantransportiert werden. Alternativ oder zusätzlich können von Lastkraftwagen in kurzer Zeit sehr viele von wenigstens einem Zug an die Plattformen übergebene Ladungsträger übernommen und abtransportiert werden, um die entsprechenden Abschnitte der Plattformen wieder für die Aufnahme anderer Ladungsträger freizugeben.

Es kann also über die beiden Straßen eine Mehrzahl von Lastkraftwagen nacheinander an die Plattformen heranfahren, die dann jeweils wenigstens einen Ladungsträger in einer Richtung quer zur Längserstreckung der zugeordneten Plattform an mit den zu beladenen Stellen des Zugs korrespondierende Abschnitte der Plattformen übergeben. Es können mithin in einem bestimmten Zeitintervall mehr Ladungsträger umgeschlagen werden. Die Ladungsträger werden bedarfsweise von den Lastkraftwagen an die Plattformen übergebenen, und zwar an den mit den zu beladenden Stellen des Zugs korrespondierenden Abschnitten der Plattformen. Dort werden die Ladungsträger bis zum Heranfahren des Zugs, der die Ladungsträger übernehmen soll, zwischengespeichert. Durch die mehreren Plattformen stehen hierfür mehr geeignete Abschnitte zur Verfügung. Zur Übernahme der Ladungsträger wird wenigstens ein Zug an die Plattformen herangefahren und neben den Plattformen angehalten, so dass die zwischengespeicherten Ladungsträger in einer Richtung quer zur Längserstreckung der zugeordneten Plattformen an für die Beladung durch Ladungsträger vorgesehene Stellen des angehaltenen Zugs übergeben werden. Wie beschrieben kann auch hierbei ein wenigstens teilweises Entladen des wenigstens einen Zugs erfolgen, wobei die betreffenden Ladungsträger in einer Richtung quer zur Längserstreckung der bestreffenden Plattform an eine oder beide Plattformen übergeben werden.

Wenn die Breite der wenigstens einen Plattform quer zur Längserstreckung der Plattform korrespondierend zu wenigstens im Wesentlichen der Breite der Ladungsträger gewählt wird, kann Platz eingespart und somit die Leistungsdichte des Umschlagens von Ladungsträgern erhöht werden. Die Ladungsträger müssen erfindungsgemäß nämlich nicht auf der entsprechenden wenigstens einen Plattform sortiert werden. Ein Verschieben von Ladungsträgern in Längserstreckung der Plattform aneinander vorbei ist mithin ebenso wie der zusätzlich hierfür benötigte Platz entbehrlich. Die Übergabe der auf wenigstens einer Plattform zwischengespeicherten Ladungsträger in einer Richtung quer zur Längserstreckung der wenigstens einen Plattform jeweils an für die Beladung durch Ladungsträger vorgesehene Stellen des Zugs kann wenigstens im Wesentlichen gleichzeitig erfolgen. Ein Übergeben der Ladungsträger einer nach dem anderen würde insgesamt länger dauern. Bei einer wenigstens teilweise gleichzeitigen Übergabe von mehreren Ladungsträgern an ein und denselben Zug werden die Umschlagszeiten verkürzt. Denkbar ist auch, dass in einer Beladestation mit wenigstens einer hinreichend langen Plattform zwei oder mehr Züge wenigstens teilweise zeitgleich mit Ladungsträgern beladen werden, die jeweils in einer Richtung quer zur entsprechenden Plattform an die Züge übergeben werden.

Das Umschlagen von Ladungsträgern kann bedarfsweise beschleunigt und vereinfacht werden, wenn der mit Ladungsträgern an vorbestimmten Stellen zu beladende Zug in einer Entladestation angehalten wird. Die Entladestation kann dabei wenigstens eine Plattform zum Zwischenspeichern von Ladungsträgern, wenigstens ein Gleis zum Heranfahren des Zugs auf einer Seite der Plattform und wenigstens eine Straße zum Heranfahren von Lastkraftwagen auf der anderen Seite der Plattform umfassen. Dabei ist es grundsätzlich zweckmäßig, wenn ein entsprechender Zug zunächst an der Entladestation angehalten wird, um anschließend an der Beladestation angehalten zu werden. Dann werden in der Entladestation Stellen des Zugs beim Entladen von Ladungsträgern für ein Aufnehmen von anderen Ladungsträgern in der Beladestation freigegeben. Es ist jedoch nicht zwingend strikt zwischen einem reinen Beladen in der Beladestation und einem reinen Entladen in der Entladestation zu unterscheiden.

Es kann vielmehr auch in der Entladestation wenigstens ein Ladungsträger in einer Richtung quer zur Längserstreckung der Plattform, auf der der Ladungsträger zwischengespeichert wurde, an den angehaltenen Zug übergeben werden. Alternativ oder zusätzlich kann in der Beladestation trotz der vorhandenen Entladestation wenigstens ein Ladungsträger vom Zug in einer Richtung quer zur Längserstreckung der entsprechenden Plattform an die Plattform übergeben werden. Im Falle einer Beladestation und einer Entladestation erfolgt jedoch der Einfachheit halber das Entladen von Ladungsträgern eines Zugs vornehmlich in der Entladestation und das Beladen eines Zugs mit Ladungsträgern vornehmlich in der Beladestation. Die Übernahme und Weitergabe von Ladungsträgern mittels der Plattformen in der Beladestation und der Entladestation erfolgt jedoch der Einfachheit halber analog. Die zum Entladen vorgesehenen Ladungsträger werden mithin an der Entladestation jeweils in einer Richtung quer zur Längserstreckung der Plattform an die Plattform übergeben.

Um die wenigstens eine Plattform der Entladestation nach einem wenigstens teilweisen Entladen eines Zugs für ein Entladen von nachfolgenden Zügen wieder freizugeben, können die an der Entladestation von dem Zug an die Plattform übergebenen Ladungsträger nacheinander in einer Richtung quer zur Längserstreckung der Plattform an einer Mehrzahl von Lastkraftwagen übergeben werden. Diese transportieren die Ladungsträger dann ab. Dabei kann es zur Erhöhung der Leistungsdichte auch vorkommen, dass wenigstens ein in der Entladestation von einem Lastkraftwagen übernommener Ladungsträger zur Beladestation gefahren wird. Dort kann der Ladungsträger dann als ein von einem anderen Zug zu übernehmender Ladungsträger in einer Richtung quer zur Längserstreckung der Plattform der Beladestation an die Plattform der Beladestation übergeben werden. In diesem Abschnitt der Plattform wird der Ladungsträger dann zwischengespeichert, bis der Ladungsträger von der Plattform in einer Richtung quer zur Längserstreckung der Plattform an einen dafür vorgesehenen Zug übergeben wird. Es kann aber auch vorgesehen werden, dass ein von einem Zug in der Entladestation an die Plattform übergebener Ladungsträger ohne ein weiteres Umladen oder Verschieben an einen nachfolgenden Zug übergeben wird, und zwar von demselben Abschnitt der Plattform in einer Richtung quer zur Längserstreckung der Plattform.

Um die Leistungsdichte des Umschlags von Ladungsträgern zu erhöhen, kann es sich anbieten, in der Entladestation zu beiden Seiten des Gleises jeweils eine Plattform zum Zwischenspeichern von einer Reihe von Ladungsträgern in Längsrichtung der Plattform vorzusehen. Dann kann das Entladen flexibler erfolgen. Kann ein Ladungsträger beispielsweis nicht zu einer Seite entladen werden, weil sich in dem betreffenden Abschnitt der betreffenden Plattform bereits ein Ladungsträger befindet, so kann der Ladungsträger des Zugs gegebenenfalls zur anderen Seite in einer Richtung quer zur Längserstreckung der dortigen Plattform von der Plattform übernommen werden. So können in einfacher Weise mögliche Verspätungen einzelner Lastkraftwagen ausgeglichen werden. Die Lastkraftwagen können also eine Verspätung riskieren und mithin länger für den tatsächlichen Transport eingesetzt werden. Dies wäre nicht in gleicher Weise möglich, wenn Lastkraftwagen stets eine gewisse Wartezeit an der Entladestation einplanen müssten. Mithin wird es regelmäßig bevorzugt sein, wenn zu den dem Gleis abgewandten Seiten der Plattformen jeweils eine Straße zum Heranfahren von Lastkraftwagen vorgesehen ist.

Dies ist aber nicht zwingend. Ein von einem Zug in der Entladestation entladener und an die angrenzende Plattform übergebener Ladungsträger kann auch von einem anderen Zug, der auf der anderen Seite der Plattform angehalten werden kann, in einer Richtung quer zur Längserstreckung der entsprechenden Plattform übernommen werden. Mithin kann es bevorzugt sein, wenn zu den dem Gleis abgewandten Seiten der Plattformen eine Straße zum Heranfahren von Lastkraftwagen und ein Gleis zum Heranfahren eines Zugs vorgesehen sind. In selteneren Fällen ist es auch denkbar, dass drei Gleise mit jeweils einer Plattform zwischen jeweils zwei benachbarten Gleisen in der Entladestation vorgesehen sind. Gleiches gilt grundsätzlich auch für die Beladestation.

Wenn die zum Entladen vorgesehenen Ladungsträger an der Entladestation jeweils in einer Richtung quer zur der Längserstreckung der zugehörigen Plattform an die Plattformen übergeben werden, können die Plattformen besonders zweckmäßig ausgenutzt werden, um das Umschlagen der Ladungsträger zu vereinfachen und zu beschleunigen. Dies gilt alternativ oder zusätzlich auch dann, wenn die an der Entladestation von dem Zug an die Plattformen übergebenen Ladungsträger nacheinander in einer Richtung quer zur Längserstreckung der zugeordneten Plattform an eine Mehrzahl von Lastkraftwagen übergeben werden.

Um die Entladestation möglichst effizient zu nutzen und die Leistungsdichte des Umschlags von Ladungsträgern zu erhöhen, können in der Entladestation zum Beladen vorgesehene Ladungsträger von wenigstens einem Lastkraftwagen an die wenigstens eine Plattform herangefahren und in einer Richtung quer zur Längserstreckung der zugehörigen Plattform an die zugehörige Plattform übergeben werden. Die Ladungsträger können dann in der Entladestation auf einen Zug geladen werden, wenn an der entsprechenden Stelle einer Plattform der Beladestation ein Abschnitt der Plattform bereits durch einen anderen Ladungsträger belegt ist, der erst auf einen der nachfolgenden Züge geladen werden soll. Die zum Beladen vorgesehenen und an die wenigstens eine Plattform in der Entladestation übergebenen Ladungsträger können in einer Richtung quer zur Längserstreckung der wenigstens einen Plattform an den in der Entladestation angehaltenen Zug übergeben werden. Dies ist einfach, schnell und zuverlässig möglich.

Auch in der Beladestation kann die Flexibilität und bedarfsweise auch die Leistungsdichte erhöht werden, indem in der Beladestation zwei Gleise zum Heranfahren jeweils eines Zugs vorgesehen sind. Zwischen den beiden Gleisen kann dann eine Plattform vorgesehen sein. Es können so mehr Züge an dem Umschlag der Ladungsträger beteiligt werden und es können Ladungsträger direkt über die zwischen den Gleisen vorgesehene Plattform von einem auf einem Gleis angehaltenen Zug auf einen andern - bedarfsweise später - auf dem anderen Gleis angehaltenen anderen Zug umgeladen werden. Zur weiteren Steigerung einerseits der Flexibilität und der Leistungsdichte kann auf den der Plattform zwischen den beiden Gleisen abgewandten Seiten der beiden Gleise jeweils eine Plattform vorgesehen sein. Mithin sind dann also in der Beladestation wenigstens drei Plattformen vorgesehen, die für das zeitweise Zwischenspeichern von Ladungsträgern genutzt werden können.

Um eine gute Anbindung der beiden Gleise an den Ladungsträgertransport über den öffentlichen Straßenverkehr zu erzielen, um ein größeres Umschlagvolumen an Ladungsträgern zu erreichen, bietet es sich weiter an, wenn an den den beiden Gleisen abgewandten Seiten der seitlich der Gleise vorgesehenen Plattformen jeweils eine Straße zum Heranfahren von Lastkraftwagen vorgesehen ist. Die drei Plattformen und zwei Gleise sind dann auf beiden Seiten von Straßen zum Heranfahren von Lastkraftwagen an die äußeren Plattformen eingefasst. Sollte dies ausreichend sein, wäre aber auch nur eine einzige Straße angrenzend an einer der äußeren Plattformen denkbar.

Damit auch zwischen Zügen ein intensiver Umschlag von Ladungsträgern erfolgen kann, bietet es sich an, dass in der Entladestation zum Beladen vorgesehene Ladungsträger von einem Zug an die wenigstens eine Plattform herangefahren und in einer Richtung quer zur Längserstreckung der zugehörigen Plattform an die zugehörige Plattform übergeben werden. Anschließend können die zum Beladen vorgesehenen und von dem Zug an die wenigstens eine Plattform übergebenen Ladungsträger in der Entladestation in einer Richtung quer zur Längserstreckung der wenigstens einen Plattform an einen nachfolgend in der Entladestation angehaltenen Zug übergeben werden. Die beiden am Umschlag der Ladungsträger beteiligten Züge können sich dabei dasselbe Gleis teilen oder auf benachbarten Gleisen an die zwischen den Gleisen angeordnete und am Umschlag der Ladungsträger beteiligte Plattform heranfahren. Der zu übergebende Ladungsträger wird dann in einer Richtung quer zur Längserstreckung von einem Zug auf den nächsten übergeben und zwischenzeitlich bedarfsweise auf der Plattform zwischengespeichert.

Um in der Entladestation die Flexibilität und bedarfsweise auch die Leistungsdichte erhöhen zu können, können in der Entladestation zwei Gleise zum Heranfahren jeweils eines Zugs und zwischen den Gleisen eine Plattform vorgesehen sein. So lassen sich mehr Züge an dem Umschlag der Ladungsträger beteiligen und es können zudem Ladungsträger direkt über die zwischen den Gleisen vorgesehene Plattform von einem auf einem Gleis angehaltenen Zug auf einen andern - bedarfsweise später - auf dem anderen Gleis angehaltenen anderen Zug umgeladen werden. Zur weiteren Steigerung der Flexibilität und der Leistungsdichte kann auf den der Plattform zwischen den beiden Gleisen abgewandten Seiten der beiden Gleise jeweils eine Plattform vorgesehen sein. Mithin sind dann also in der Entladestation wenigstens drei Plattformen vorgesehen, die für das zeitweise Zwischenspeichern von Ladungsträgern genutzt werden können.

Um die Anbindung der beiden Gleise an den Transport von Ladungsträgern über den öffentlichen Straßenverkehr zu verbessern, so dass sich ein größeres Umschlagvolumen an Ladungsträgern erzielen lässt, bietet es sich weiter an, wenn an den den beiden Gleisen abgewandten Seiten der seitlich der Gleise vorgesehenen Plattformen jeweils eine Straße zum Heranfahren von Lastkraftwagen vorgesehen ist. Die drei Plattformen der Entladestation und zwei Gleise sind dann auf beiden Seiten von Straßen zum Heranfahren von Lastkraftwagen an die äußeren Plattformen eingefasst. Sollte dies ausreichend sein, wäre aber auch nur eine einzige Straße angrenzend an einer der äußeren Plattformen denkbar.

Die Beladestation kann für den Umschlag von Ladungsträgern zwischen Zügen in einfacher Weise genutzt werden, wenn in der Beladestation zum Beladen vorgesehene Ladungsträger von einem Zug an die wenigstens eine Plattform herangefahren und in einer Richtung quer zur Längserstreckung der zugehörigen Plattform an die zugehörige Plattform übergeben werden. Die zum Beladen vorgesehenen und von dem Zug an die wenigstens eine Plattform übergebenen Ladungsträger können dann in der Beladestation in einer Richtung quer zur Längserstreckung der wenigstens einen Plattform an einen nachfolgend in der Beladestation angehaltenen Zug übergeben werden. Die beiden am Umschlag der Ladungsträger beteiligten Züge können sich dabei dasselbe Gleis teilen oder auf benachbarten Gleisen an die zwischen den Gleisen angeordnete und am Umschlag der Ladungsträger beteiligte Plattform heranfahren. Der zu übergebende Ladungsträger wird dann in einer Richtung quer zur Längserstreckung von einem Zug auf den nächsten übergeben und zwischenzeitlich bedarfsweise auf der Plattform zwischengespeichert.

Eine weitere Steigerung der Flexibilität hinsichtlich des Verfahrens zum Umschlagen von Ladungsträgern und damit eine höhere Leistungsdichte kann erreicht werden, indem sich die wenigstens eine Plattform in der Längserstreckung der Plattform durchgehend von der Entladestation zur Beladestation oder umgekehrt erstrecken. Es ist mithin also keine körperliche Trennung zwischen der Beladestation und der Entladestation erforderlich. Die Entladestation kann vielmehr - mehr oder weniger fließend - in die Beladestation übergehen. Auch kann je nach Bedarf die Beladestation oder die Entladestation verlängert werden, wobei dann entsprechend die Entladestation oder die Beladestation verkürzt wird. Mithin können die Bereiche der Plattform, die der Beladestation und der Entladestation zugeordnet werden, variieren und dynamisch an den jeweiligen Bedarf angepasst werden.

Die entsprechenden Vorteile treten umso mehr zu Tage, wenn sich alle Plattformen in der Längserstreckung der jeweiligen Plattform, durchgehend von der Entladestation zur Beladestation oder umgekehrt erstrecken und/oder wenn sich das wenigstens eine Gleis und die wenigstens eine Straße entlang der Längserstreckung der wenigstens einen Plattform durchgehend von der Entladestation zur Beladestation oder umgekehrt erstrecken. Dies erlaubt letztlich eine kompakte Bauform von Beladestation und Entladestation. Dabei wird gleichzeitig eine hohe Effizienz und Leistungsdichte hinsichtlich des Verfahrens zum Umschlagen von Ladungsträgern zwischen Straße und Schiene ermöglicht.

Nachfolgend wird die Erfindung anhand einer lediglich Ausführungsbeispiele darstellenden Zeichnung näher erläutert. In der Zeichnung zeigt
- Fig. 1A-D: eine Abfolge von Verfahrensschritten eines ersten erfindungsgemäßen Verfahrens in schematischer Darstellung,
- Fig. 2A-D: eine Abfolge von Verfahrensschritten eines zweiten erfindungsgemäßen Verfahrens in schematischer Darstellung,
- Fig. 3A-B: eine Abfolge von Verfahrensschritten eines dritten erfindungsgemäßen Verfahrens in schematischer Darstellung,
- Fig. 4A-D: eine Abfolge von Verfahrensschritten eines vierten erfindungsgemäßen Verfahrens in schematischer Darstellung, und
- Fig. 5A-B: eine Abfolge von Verfahrensschritten eines fünften erfindungsgemäßen Verfahrens in schematischer Darstellung, und

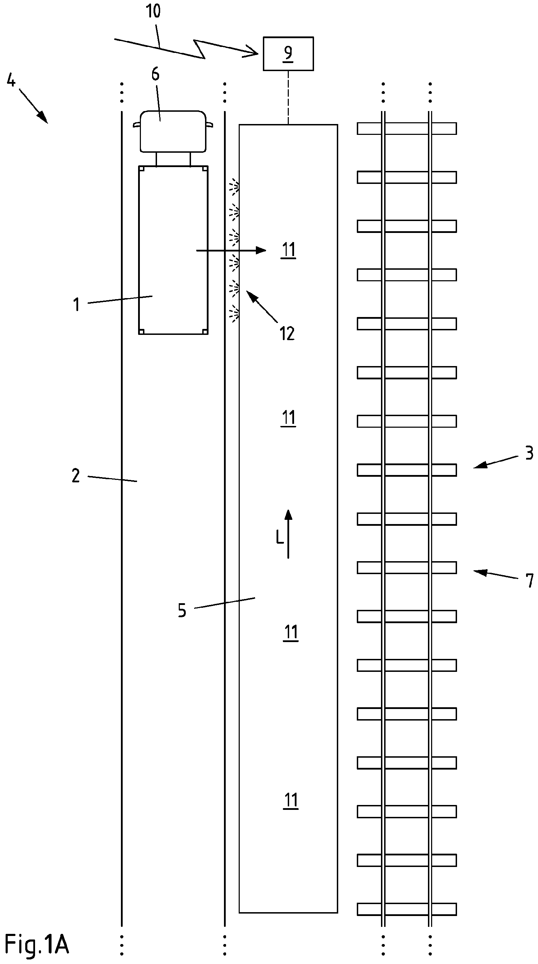

In den Fig. 1A-D ist ein Verfahren zum Umschlagen von Ladungsträgern 1 von der Straße 2 auf die Schiene 3 in einer schematischen Abfolge einzelner Schritte dargestellt. Das Verfahren bedient sich dabei einer Beladestation 4 mit einer Plattform 5 zum Zwischenspeichern von einer Reihe von Ladungsträgern 1 in Längsrichtung L der Plattform 5, mit einer Straße 2 zum Heranfahren von Lastkraftwagen 6 auf einer Seite der Plattform 5 und einem Gleis 7 zum Heranfahren eines Zugs 8 auf der anderen Seite der Plattform 5. Die Beladestation 4 ist in einer Ansicht von oben dargestellt, wobei in der Fig. 1A dargestellt ist, dass eine Steuereinheit 9 der Beladestation 4 eine Information 10 empfängt, welche Auskunft darüber gibt, an welchen Stellen eines noch nicht an der Beladestation 4 eingetroffenen Zugs 8 dieser Zug 8 Ladungsträger 1 aufnehmen kann, wenn er denn an der Beladestation 4 eingetroffen ist. Diese Information 10 kann bedarfsweise recht frühzeitig erhalten werden, beispielsweise bevor der Zug 8 an weiteren, vorhergehenden Beladestationen 4 be- und/oder entladen worden ist.

Anhand der betreffenden Information 10 kann festgelegt werden, in welchen Abschnitten 11 der Plattform 5 zweckmäßigerweise die auf den Zug 8 zu ladenden Ladungsträger 1 auf der Plattform 5 positioniert werden sollten, damit die dort positionierten Ladungsträger 1 später in einer Richtung quer zur Längserstreckung L der Plattform 5 an den Zug 8 übergeben werden können. Diese Abschnitte 11 der Plattform 5 können beispielsweise optisch, etwa durch eine Beleuchtung 12, gekennzeichnet werden. Der Fahrer eines Lastkraftwagens 6, der einen auf den Zug 8 zu ladenden Ladungsträger 1 über die Straße 2 an die Plattform 5 herantransportiert, kann so genau den Abschnitt 11 der Plattform 5 anfahren, von dem der Ladungsträger 1 später an den Zug 8 übergeben werden soll. Der Lastkraftwagen 6 wird dann an der entsprechenden Stelle der Plattform 5 angehalten und übergibt den Ladungsträger 1 in einer Richtung quer zur Längserstreckung L der Plattform 5 an die Plattform 5, wo der Ladungsträger 1 bis zum Eintreffen des entsprechenden Zugs 8 zwischengespeichert wird. Der Lastkraftwagen 6 kann dann nach der Übergabe des Ladungsträgers 1 für andere Transporte genutzt werden.

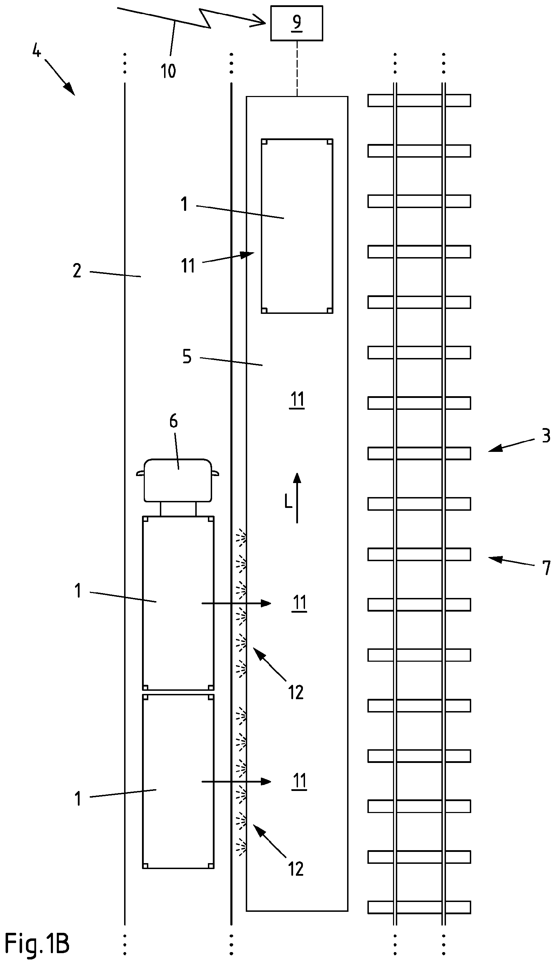

In gleicher Weise kann gemäß Fig. 1B ein weiterer Lastkraftwagen 6 an die Plattform 5 heranfahren, bevor der Zug 8 zur Übernahmen der Ladungsträger 1 an der Beladestation 4 eingetroffen ist. Dieser Lastkraftwagen 6 übergibt dabei zwei Ladungsträger 1 an die Plattform 5 und zwar jeweils an Abschnitte 11 der Plattform 5, an denen die Ladungsträger 1 später an den Zug 8 übergeben werden sollen. Die Übergabe erfolgt auch hier in einer Richtung quer zur Längserstreckung L der Plattform5.

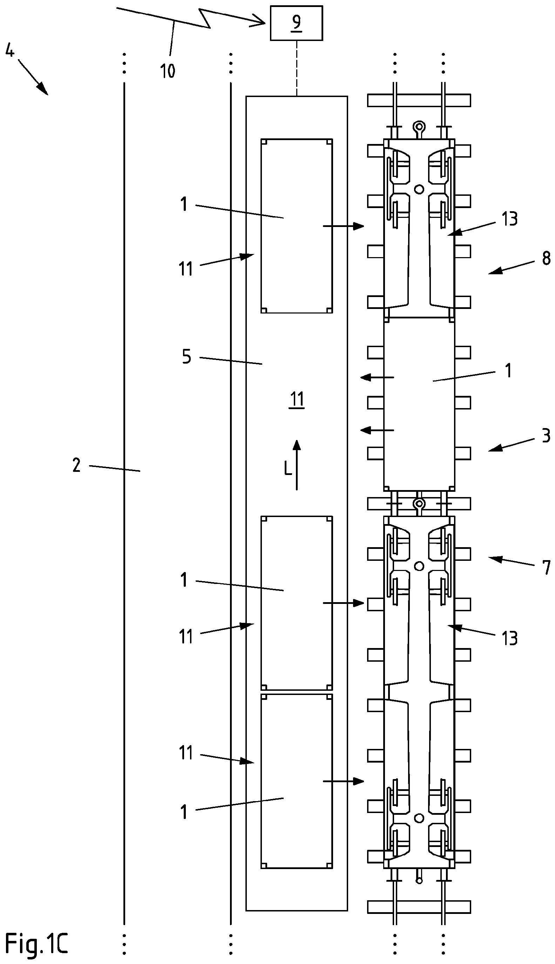

Wenn der Zug 8 eintrifft, wie dies in der Fig. 1C dargestellt ist, können die auf der Plattform 5 zwischengespeicherten Ladungsträger 1 in einer Richtung quer zur Längserstreckung L der Plattform 5 an den Zug 8 übergeben werden. Die Ladungsträger 1 sind zuvor ganz bewusst in den Abschnitten 11 der Plattform 5 an die Plattform 5 übergeben worden, von denen aus die Ladungsträger 1 in einer Richtung quer zur Längserstreckung L der Plattform 5 an den Zug 8 übergeben werden können, ohne dass dies beispielsweise zu einer Kollision mit bereits auf dem Zug 8 vorgesehenen Ladungsträgern 1 führt. Das Übergeben der Ladungsträger 1 an den Zug 8 kann wenigstens im Wesentlichen zeitglich erfolgen. Zudem kann während, vor oder nach dem Beladen des Zugs 8 auch ein von dem Zug 8 an die Plattform 5 herantransportierter Ladungsträger 1 von dem Zug 8 in einer Richtung quer zur Längserstreckung L der Plattform 5 an die Plattform 5 übergeben werden. Dies bedeutet, dass in der Beladestation 4 auch ein Entladen des Zugs 8 erfolgen kann.

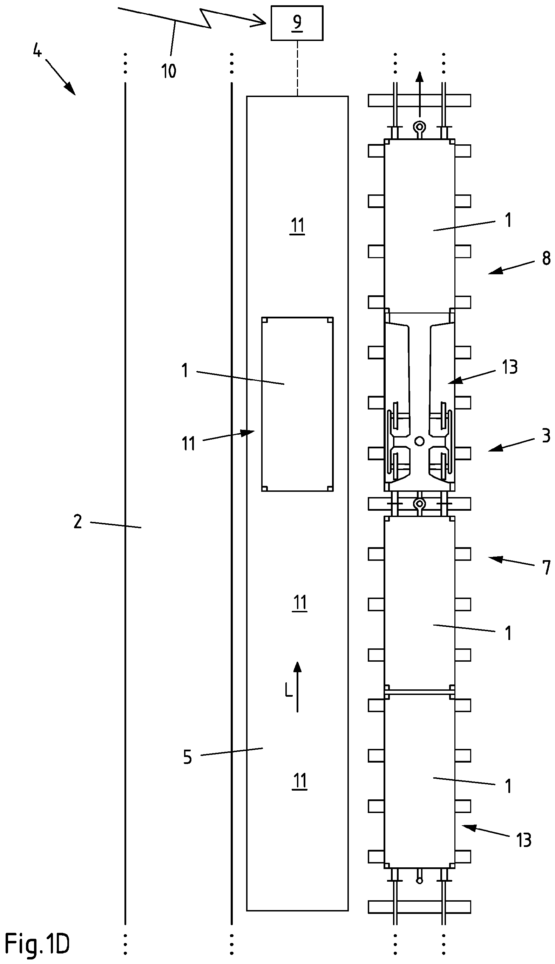

Wie dies in der Fig. 1D dargestellt ist, verlässt der Zug 8 die Beladestation 4 nach dem entsprechenden Übergeben der Ladungsträger 1. Dabei bleibt bei dem dargestellten und insoweit bevorzugten Verfahren ein Ladungsträger 1 auf der Plattform 5 zurück. Dieser Ladungsträger 1 kann wahlweise auf der Straße 2 oder auf der Schiene 3 abtransportiert werden. Im erstgenannten Fall wird ein Lastkraftwagen 6 an die Plattform 5 heranfahren, woraufhin der Ladungsträger 1 in einer Richtung quer zur Längserstreckung L der Plattform 5 an den Lastkraftwagen 6 übergeben wird. Dieser kann durch eine optische Anzeige, Beleuchtung 12 oder dergleichen zu dem zu übernehmenden Ladungsträger 1 geleitet werden. Im letztgenannten Fall kann ein nachfolgender Zug 8 an einer Position neben der Plattform 5 angehalten werden, so dass neben dem Ladungsträger 1 ein Abschnitt eines Wagons 13 des Zugs 8 positioniert wird, an den der Ladungsträger 1 in einer Richtung quer zur Längserstreckung L der Plattform 5 von der Plattform 5 auf den entsprechenden Wagon 13 des Zugs 8 übergeben werden kann. Es ergibt sich also, dass stets für jeden Zug 8 eine geeignete Position bestimmt werden kann, an der der Zug 8 angehalten wird, um eine möglichst einfache und effiziente Übergabe und/oder Übernahme der Ladungsträger 1 zu erreichen, ohne dass es zu einem Konflikt hinsichtlich der für die Ladungsträger 1 bereitstehenden Abschnitte 11 der Plattform 5 kommt. So können von der Plattform 5 auch Ladungsträger 1 übernommen werden, die erst von einem übernächsten oder noch späteren Zug 8 übernommen werden sollen. Die einzelnen Züge 8 werden dann immer gerade so an der Plattform 5 angehalten, dass die Übergabe der Ladungsträger 1 an freie Stellen auf den Wagons 13 erfolgen kann.

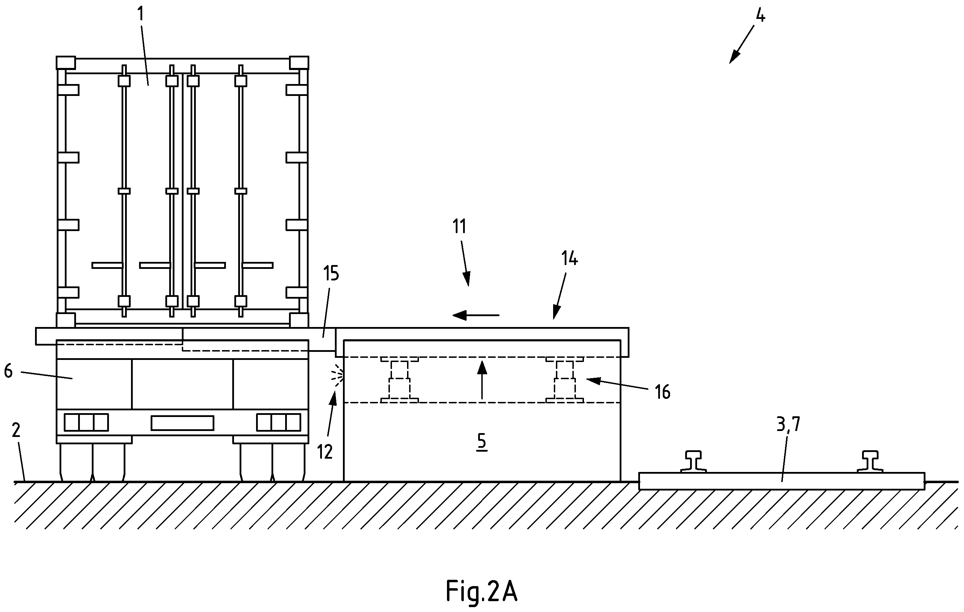

In den Fig. 2A-D ist die Übergabe der Ladungsträger 1 vom Lastkraftwagen 6 auf die Plattform 5 einerseits und von der Plattform 5 auf den Zug 8 andererseits rein schematisch und exemplarisch dargestellt. Die Übergabe von Ladungsträgern 1 von einem Zug 8 auf eine Plattform 5 und von der Plattform 5 auf einen Lastkraftwagen 6 erfolgt dabei in gleicher Weise, nur in die entgegengesetzte Richtung. Hierzu weist die Plattform 5 eine entsprechende Transportvorrichtung 14 auf, die ebenfalls nur exemplarisch beschrieben wird. Es sind auch andere Transportvorrichtungen 14 möglich, wobei sich der Fachmann grundsätzlich bereits bekannter Transporteinrichtungen 14 bedienen kann. Diese brauchen daher vorliegend nicht im Einzelnen diskutiert zu werden.

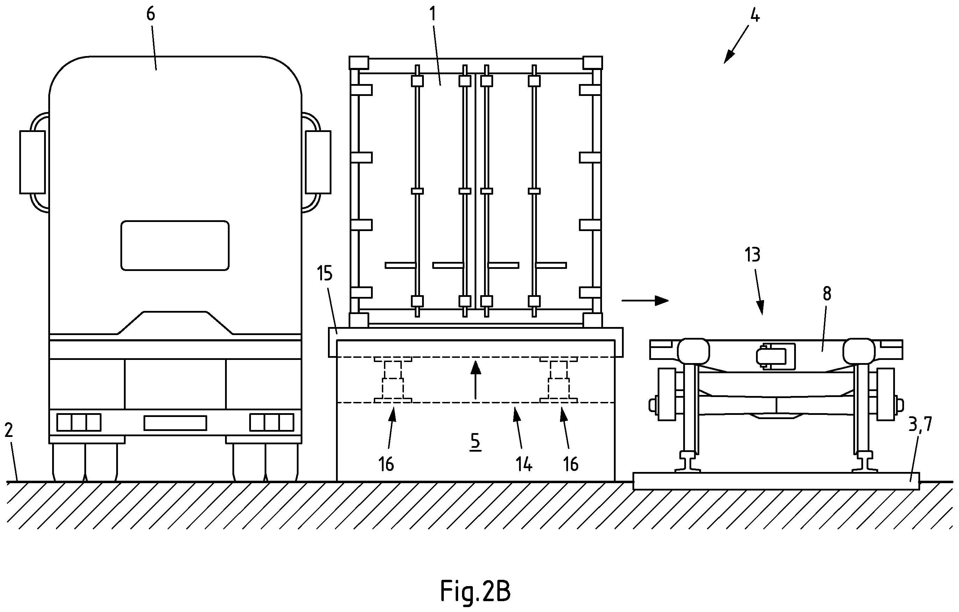

In der Fig. 2A ist dargestellt, wie ein Lastkraftwagen 6 mit einem Ladungsträger 1 neben der Plattform 5 hält, wobei ein Tragarm 15 der Transportvorrichtung 14 von der Plattform 5 aus seitlich unter den Ladungsträger 1 geschoben worden ist. Dieser kann den Ladungsträger 1, bedarfsweise nach vorheriger Entriegelung vom Lastkraftwagen 6, etwa mittels einer Hebeeinrichtung 16 anheben und somit vom Lastkraftwagen 6 abheben. Sodann kann der Tragarm 15 zusammen mit dem Ladungsträger 1 zurückverstellt werden, bis der Ladungsträger 1 zusammen mit dem Tragarm 15 auf der Plattform 5 angeordnet ist. Dies ist in der Fig. 2B dargestellt. Nicht dargestellt ist, dass die Transporteinrichtung 14 wenigstens einen weiteren Tragarm 15 umfasst, der den Ladungsträger 1 an einer anderen Stelle untergreift, um ein Kippen des Ladungsträgers 1 zu vermeiden. Der Ladungsträger 1 kann in dem Abschnitt 11 auf der Plattform 5 zwischengespeichert werden, bis der Zug 8 eintrifft, an den der Ladungsträger 1 übergeben werden soll. Dabei können jedem Abschnitt 11 der Plattform 5 zwei Tragarme 15 zugeordnet sein bzw. zwei Tragarme 15 einen Abschnitt der Plattform 5 definieren, da die Tragarme 15 vorzugsweise nicht oder nicht nennenswert in der Längserstreckung L der Plattform 5 verstellt werden können. Grundsätzlich kann pro Abschnitt 11 der Plattform 5 aber auch eine andere Anzahl an Tragarmen 15 oder anderen Übergabemitteln vorgesehen sein.

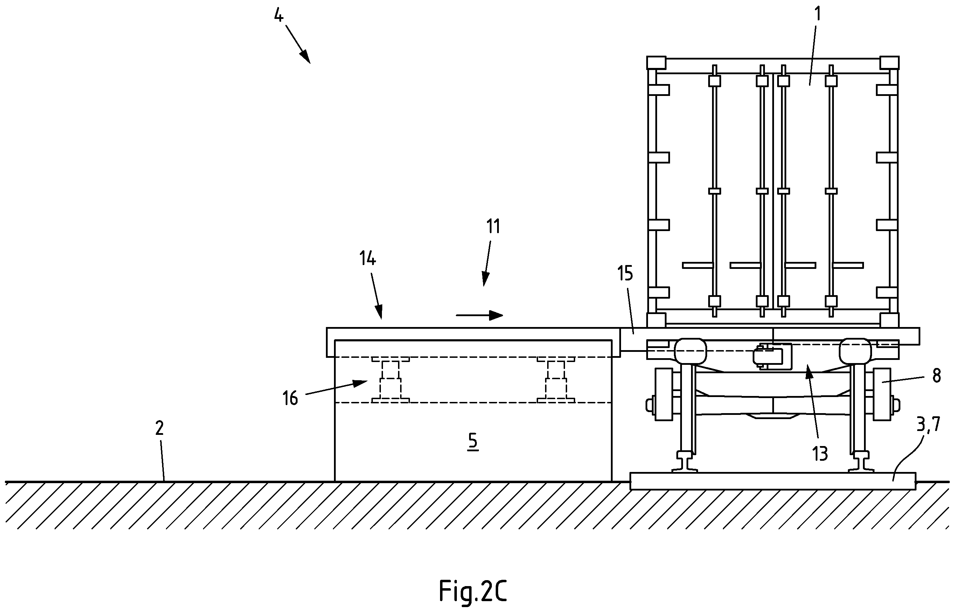

Um den Ladungsträger 1 von der Plattform 5 auf den Zug 8 zu übergeben, kann der Tragarm 15 gemäß Fig. 2C zusammen mit dem Ladungsträger 1 von der Plattform 5 zur anderen Seite ausgefahren werden, so dass der Ladungsträger 1 über einem Wagon 13 des Zugs 8 angeordnet ist. Sodann kann der Tragarm 15 den Ladungsträger 1, etwa mit der Hebeeinrichtung 16, auf dem Wagon 13 des Zugs 8 absetzen.

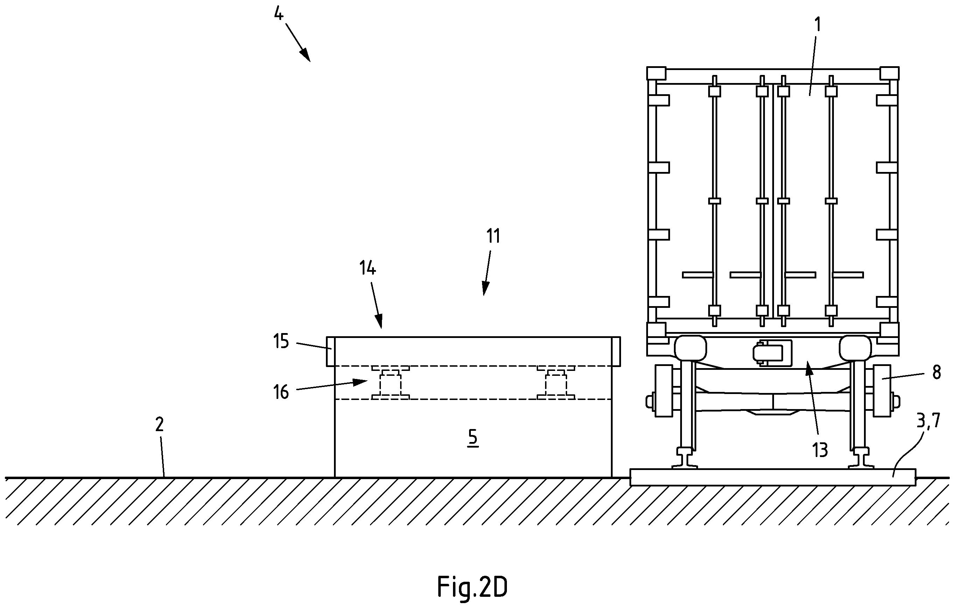

Anschließend kann eine Verriegelung des Ladungsträgers 1 mit dem Wagon 13 erfolgen. Der Tragarm 15 wird nach der Übergabe des Ladungsträgers 1 an den Zug 8 wieder zurück auf die Plattform 5 verschoben, so dass der nun mit dem übergebenen Ladungsträger 1 beladene Zug 8 von der Plattform 5 wegfahren kann, wie dies in der Fig. 2D skizziert ist.

Die Übergabe der Ladungsträger 1 erfolgt auf die beschriebene Weise oder auf eine andere, bedarfsweise ähnliche Weise, jeweils in einer Richtung quer, insbesondere senkrecht, zur Längserstreckung L der Plattform 5. Durch dieses Vorgehen ist ein Verschieben oder Sortieren der Ladungsträger 1 in der Längserstreckung L der Plattform 5 entbehrlich, wenn die Steuereinheit 9 der Beladestation 4 sicherstellt, dass die Ladungsträger 1 stets an einer geeigneten Stelle, also auf einem zweckmäßigen Abschnitt 11 der Plattform 5, zwischengespeichert werden.

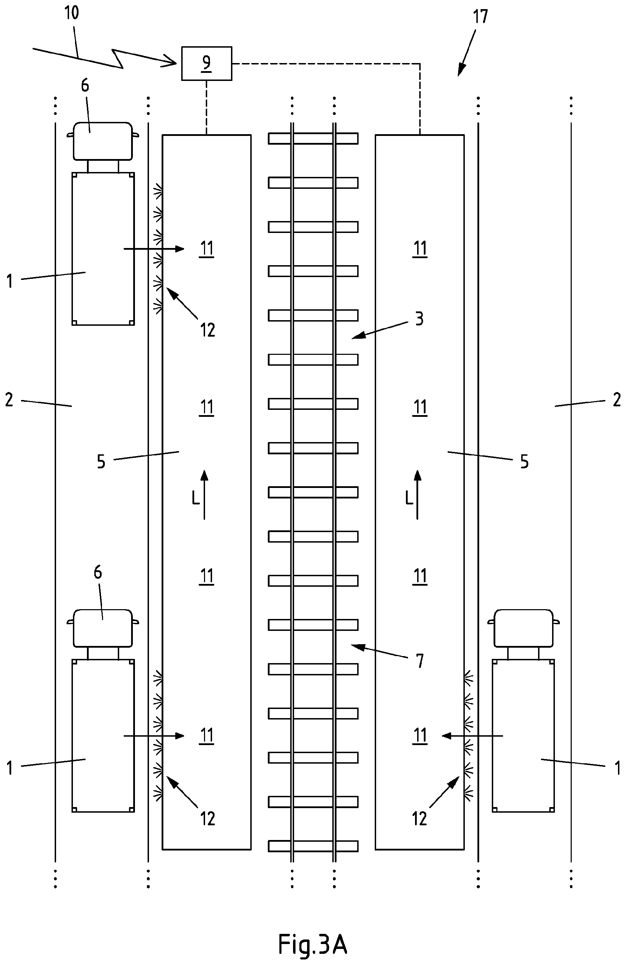

In den Fig. 3A-B ist ein weiteres Verfahren zum Umschlagen von Ladungsträgern 1 mit einer Beladestation 17 dargestellt, bei der zu beiden Seiten des Gleises 7 eine Plattform 5 und außerhalb der Plattformen 5 jeweils eine Straße 2 vorgesehen ist. Diese Ausgestaltung erlaubt ein flexibleres Anliefern von Ladungsträgern 1 zur Übergabe auf einen Zug 8. In der Fig. 3A sind drei Lastkraftwagen 6 dargestellt, die jeweils einen Ladungsträger 1 an die Plattformen 5 anliefern und jeweils in einer Richtung quer zur Längserstreckung L der jeweiligen Plattform 5 an die Plattform 5 übergeben. Der Einfachheit halber sind die Lastkraftwagen 6 gemeinsam dargestellt. Dies bedeutet aber nicht, dass die Lastkraftwagen 6 auch zur gleichen Zeit an der Beladestation 17 sein müssen. Vielmehr wird es in der Praxis regelmäßig vorkommen, dass die Lastkraftwagen 6 nacheinander an der Beladestation 17 ankommen, um die Ladungsträger 1 an die Plattformen 5 zu übergeben. Die Übergabe der Ladungsträger 1 kann dabei auf die bereits beschriebene Art erfolgen.

Gleichwohl können zwei gleichzeitig an die Beladestation 17 heranfahrende Lastkraftwagen 6 Ladungsträger 1 auf unterschiedliche Plattformen 5 übergeben, so dass sich die Lastkraftwagen 6 dabei nicht behindern. Bei dem dargestellten Verfahrensbeispiel sind die Ladungsträger 1 auch nicht zur Weitergabe an denselben Zug 8, sondern an zwei die Beladestation 17 nacheinander anfahrende Züge 8 vorgesehen. Dabei besteht die Besonderheit, dass die beiden Züge 8 an derselben Position der Beladestation 17 mit jeweils einem Ladungsträger 1 beladen werden sollen. Dies wäre nur mit einem zusätzlichen Aufwand möglich, wenn nur eine Plattform 5 vorgesehen wäre. Da aber zwei Plattformen 5 vorgesehen sind, können zwei Ladungsträger 1 an dieselben Abschnitte der beiden Plattformen 5 übergeben werden. Diese befinden sich dann nach der Übergabe an die Plattformen 5 in einer Richtung quer zur Längserstreckung der Plattformen 5 einander gegenüberliegend bezogen auf das Gleis 7.

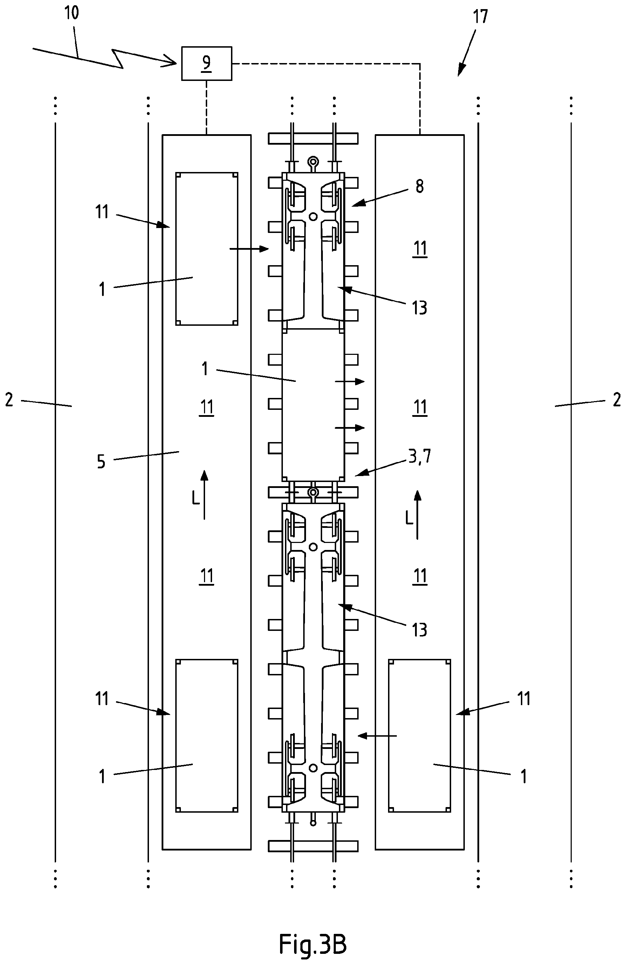

Wenn nun, wie dies in der Fig. 3B dargestellt ist, der erste Zug 8 in die Beladestation 17 einfährt, kann ein Ladungsträger 1 der beiden gegenüberliegend auf den gegenüberliegenden Plattformen 5 angeordneten Ladungsträger 1 an einen Wagon 13 des Zugs 8 übergeben werden. Der andere der beiden gegenüberliegend angeordneten Ladungsträger 1 verbleibt auf der zugeordneten Plattform 5, bis der nachfolgende Zug 8 einfährt und der Ladungsträger 1 auf diesen nachfolgenden Zug 8 verladen werden kann. Auf den in der Fig. 3B dargestellten Zug 8 wird von einem anderen Abschnitt 11 der linken Plattform 5 noch ein weiterer Ladungsträger 1 in einer Richtung quer zur Längserstreckung L der Plattform 5 an den Zug 8 übergeben. Zudem wird von dem Zug 8, auch wenn dies nicht erforderlich wäre, noch ein Ladungsträger 1 in einer Richtung quer zur Längserstreckung L der Plattform 5 an die Plattform 5 übergeben. Es muss also nicht zwingend zwischen einem Beladen und einem Entladen eines Zugs 8 in der Beladestation 17 unterschieden werden. Es können einzelne Züge 8 in der Beladestation 17 möglicherweise auch nur entladen werden, ohne dass die Züge 8 in der Beladestation 17 auch einen Ladungsträger 1 aufnehmen müssen.

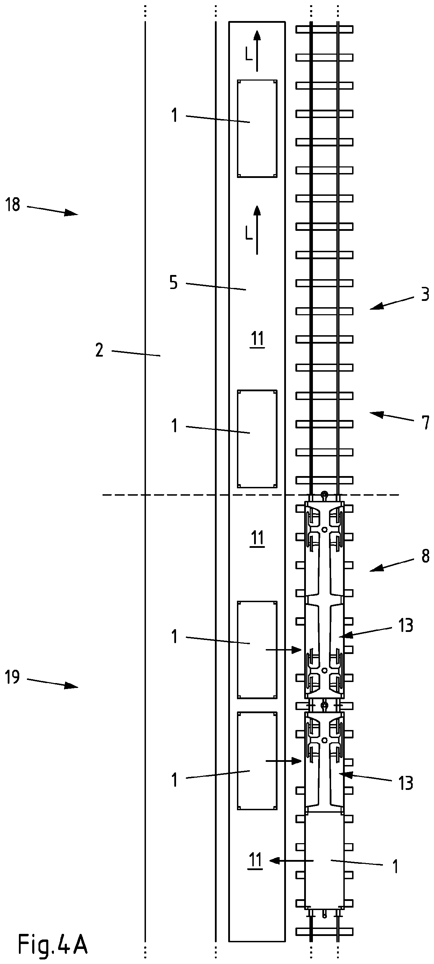

In den Fig. 4A-D ist ein weiteres Verfahren zum Umschlagen von Ladungsträgern 1 mit einer Beladestation 18 und einer Entladestation 19 beschrieben. Das dargestellte und insoweit bevorzugte Verfahren wird mit einer Beladestation 18 und einer Entladestation 19 durchgeführt, die in Längsrichtung L der Plattform 5 ineinander übergehen. Alternativ könnten die Beladestation 18 und die Entladestation 19 aber auch räumlich voneinander getrennt sein. Die dargestellte Beladestation 18 und die dargestellte Entladestation 19 sind gleichartig ausgebildet, und zwar weisen diese vorliegend ein Gleis 7 und eine Straße 2, sowie eine dazwischen vorgesehene Plattform 5 auf. Es wären aber auch andere Ausgestaltungen denkbar, insbesondere mit mehreren Plattformen 5, Straßen 2 und/oder Gleisen 7 nebeneinander.

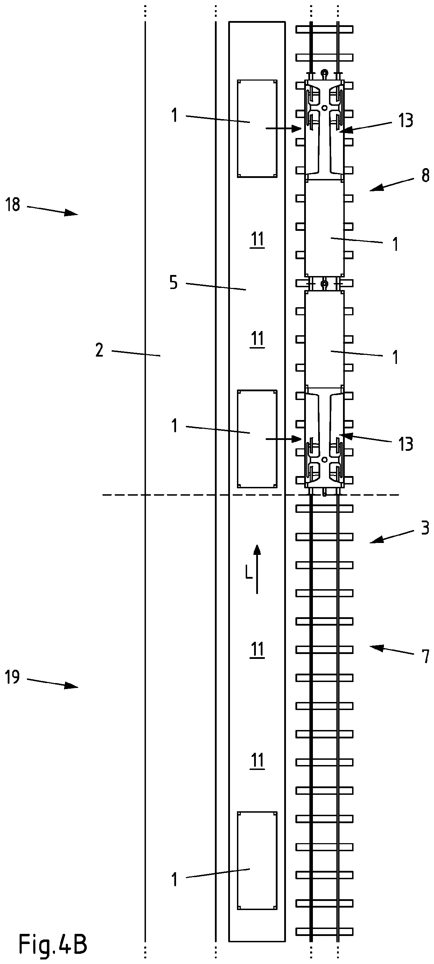

In der Fig. 4A ist ein Zug 8 in der Entladestation 19 angehalten dargestellt. Der Zug 8 übergibt in dieser Stellung zwei Ladungsträger 1 an die Plattform 5 und übernimmt einen anderen Ladungsträger 1 von der Plattform 5, der auf der Plattform 5 in dem entsprechen Abschnitt 11 der Plattform 5 zwischengespeichert worden war. In der darüber angeordneten Beladestation 18 sind zwei weitere Ladungsträger 1 in unterschiedlichen Abschnitten 11 der Plattform 5 zwischengespeichert, um von dem Zug 8 übernommen zu werden. Dazu fährt der Zug 8 von der Entladestation 19 in die Beladestation 18 und wird dort angehalten. Die Plattform 5 gibt dann die beiden zwischengespeicherten Ladungsträger 1 an den Zug 8 weiter, wie dies in der Fig. 4B dargestellt ist. Es wird mithin das Be- und Entladen eines Zugs 8 wenigstens teilweise entkoppelt, um zu vermeiden, dass sich einzelne Ladungsträger 1 beim Be- und Entladen behindern. Andererseits wird eine hohe Flexibilität bereitgestellt, da die Beladestation 18 nicht zwingend auf das Beladen des Zugs 8 und die Entladestation 19 nicht zwingend auf das Entladen des Zugs 8 beschränkt werden muss.

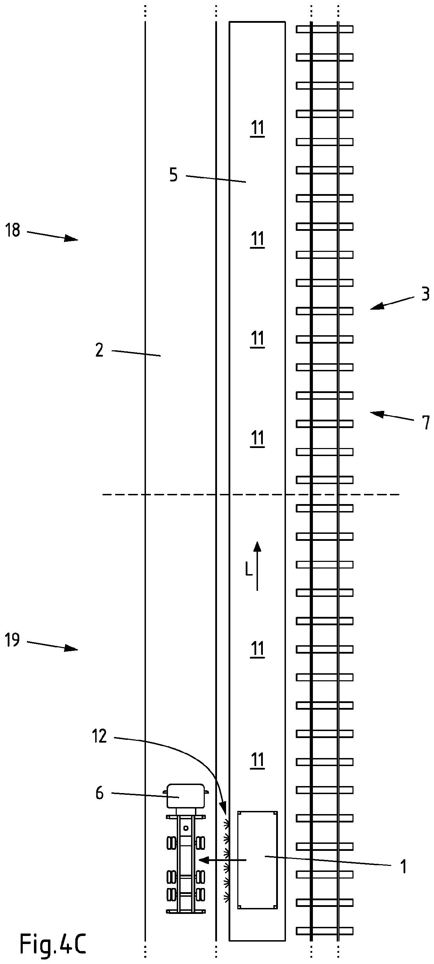

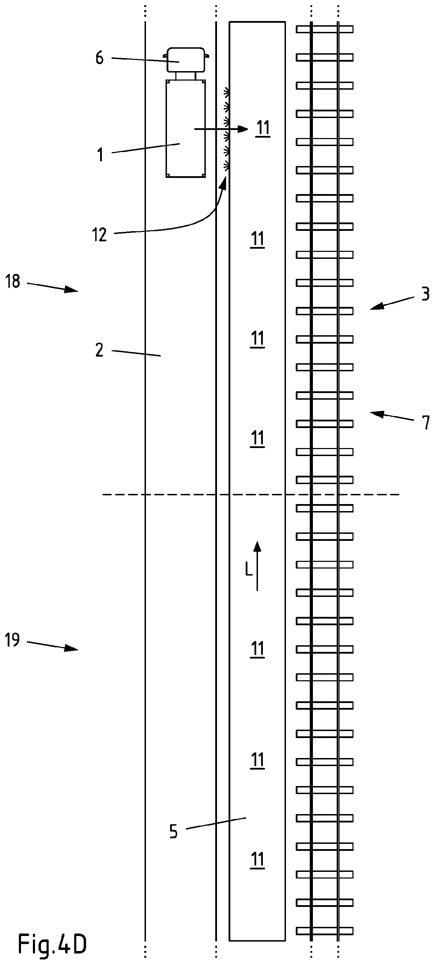

Um zu vermeiden, dass der von dem letzten Zug 8 an die Plattform 5 in der Entladestation 19 übergebene Ladungsträger 1 das Entladen eines anderen Ladungsträgers 1 von einem nachfolgenden Zug 8 an denselben Abschnitt 11 der Plattform 5 behindert, kann der zuerst übergebene Ladungsträger 1 von einem Lastkraftwagen 6 übernommen werden, wie dies in der Fig. 4C dargestellt ist. Dabei kann der Lastkraftwagen 6 über die Straße 2 zu einem entfernten Ziel gefahren werden. Es kann aber auch vorgesehen sein, dass der Ladungsträger 1 von dem Lastkraftwagen 6 nur bis in die Beladestation 18 verfahren wird, um dort an einen vorbestimmten Abschnitt 11 der dortigen Plattform 5 übergeben zu werden, wie dies in der Fig. 4D dargestellt ist. Von diesem Abschnitt 11 der Plattform 5 kann der Ladungsträger 1 an einem später in die Beladestation 18 einfahrenden Zug 8 übernommen werden, so dass der Ladungsträger 1 nicht über die Straße 2, sondern über die Schiene 3 abtransportiert wird.

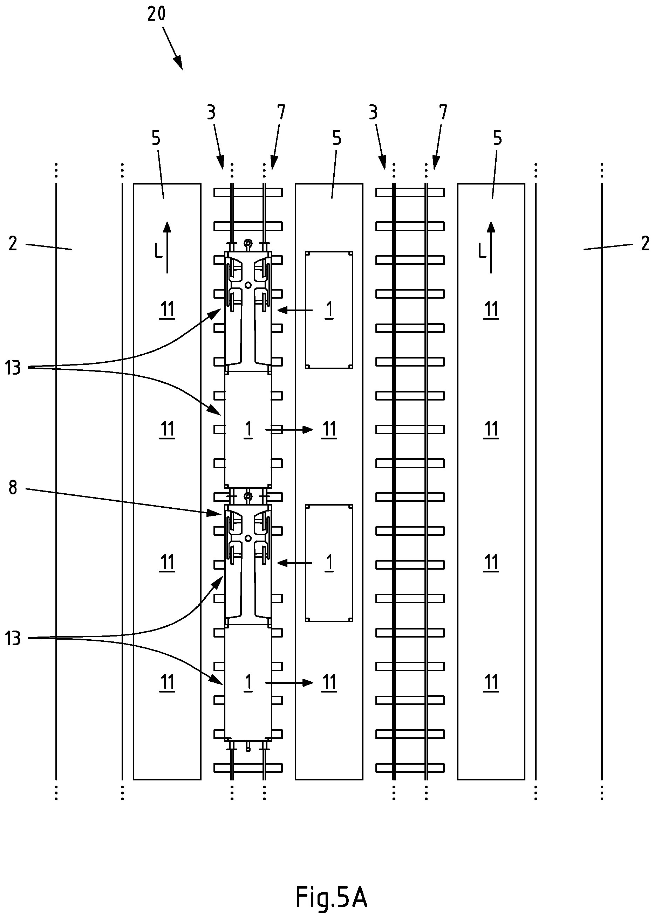

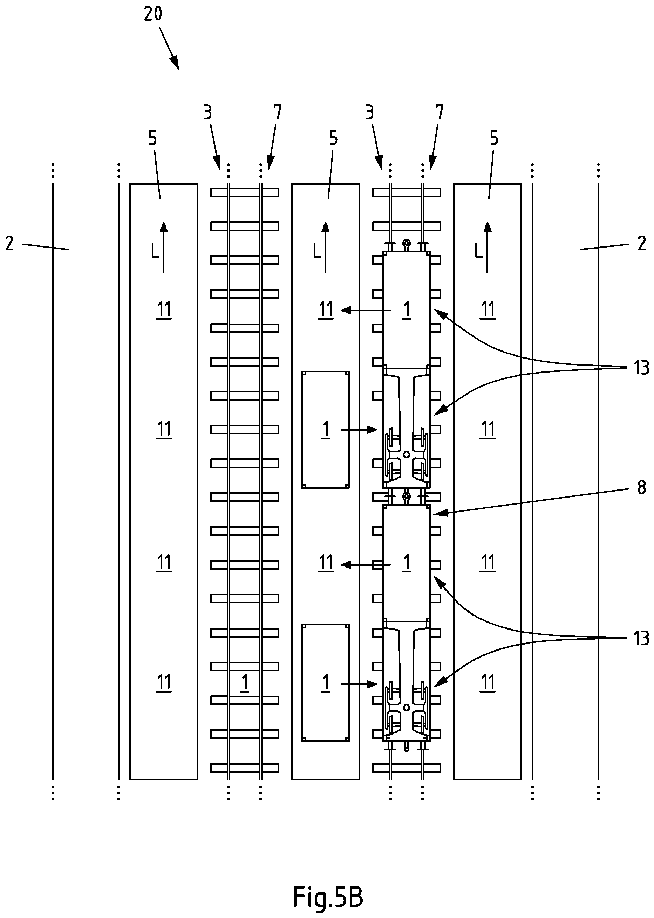

In den zuvor beschriebenen Verfahrensbeispielen wurde stets nur ein Gleis 7 verwendet. Eine derartige Beschränkung besteht tatsächlich aber nicht, wie in den Fig. 5A-B dargestellt ist. Darin wird ein weiteres Verfahren zum Umschlagen von Ladungsträgern 1 mit einer Beladestation 20 dargestellt, bei der zwei Gleise 7 und in dem dargestellten und insoweit bevorzugten Fall auch zwei Straßen 2 sowie drei jeweils dazwischen vorgesehene Plattformen 5 verwendet werden. Beim Umschlagen von Ladungsträgern 1 können auch bei der dargestellten Beladestation 20 die zuvor beschriebenen Übergaben von Ladungsträgern 1 erfolgen. Die Prinzipien sind von einem Ausführungsbeispiel auf ein anderes Ausführungsbeispiels zu übertragen. Eine Besonderheit bei der in den Fig. 5A-B dargestellten Beladestation 20 ist jedoch, dass von einem auf einem Gleis 7 einfahrenden Zug 8 Ladungsträger 1 von wenigstens einer der beiden angrenzenden Plattformen 5 übernommen und an wenigstens eine der beiden angrenzenden Plattformen 5 übergeben werden können. Dies schließt auch die zwischen den beiden Gleisen 7 vorgesehene Plattform 5 ein, wie dies in der Fig. 5A dargestellt ist. Demnach werden zwei Ladungsträger 1 von der Plattform 5 übernommen und wird ein Ladungsträger 1 an die Plattform 5 übergeben. Dieser Ladungsträger 1 wird dann von derselben Plattform 5 später an einen nachfolgend oder zeitgleich in die Beladungsstation 20 einfahrenden Zug 8 übergeben, der seinerseits einen Ladungsträger 1 an die zentrale Plattform 5 abgeben kann, wie dies in der Fig. 5B dargestellt ist. Es ist mithin eine Übergabe zwischen Schiene 3 und Straße 2 aber auch zwischen Schiene 3 und Schiene 3 möglich. Das Umschlagen von Ladungsträgern 1 kann so flexibler und effizienter gestaltet werden. Selbstverständlich kann ein von einem Zug 8 auf einem Gleis 7 abgegebener Ladungsträger 1 auch von einem anderen später auf demselben Gleis 7 einfahrenden Zug 8 übernommen werden.

### Bezugszeichenliste

- 1: Ladungsträger
- 2: Straße
- 3: Schiene
- 4: Beladestation
- 5: Plattform
- 6: Lastkraftwagen
- 7: Gleis
- 8: Zug
- 9: Steuereinheit
- 10: Information
- 11: Abschnitt
- 12: Beleuchtung
- 13: Wagon
- 14: Transportvorrichtung
- 15: Tragarm
- 16: Hebeeinrichtung
- 17: Beladestation
- 18: Beladestation
- 19: Entladestation
- 20: Beladestation
- L: Längsrichtung

## Patentansprüche

1. Verfahren zum Umschlagen von Ladungsträgern (1), insbesondere Wechselbrücken und ISO-Containern, zwischen Straße (2) und Schiene (3), mit einer Beladestation (4,17,18,20) umfassend wenigstens eine Plattform (5) zum Zwischenspeichern von einer Reihe von Ladungsträgern (1) in Längsrichtung (L) der Plattform (5), mit wenigstens einer Straße (2) zum Heranfahren von Lastkraftwagen (6) auf einer Seite der Plattform (5) und wenigstens einem Gleis (7) zum Heranfahren eines Zugs (8) auf der anderen Seite der Plattform (5),
- bei dem der Zug (8) an vorbestimmten Stellen entlang seiner Längserstreckung zur Beladung mit Ladungsträgern (1) vorgesehen ist,
- bei dem der Beladestation (4,17,18,20) und/oder einem Bediener der Beladestation (4,17,18,20) vor dem Heranfahren des Zugs (8) eine Information über die zur Beladung durch Ladungsträger (1) vorgesehenen Stellen des Zugs (8) mitgeteilt werden,
- bei dem eine Mehrzahl von Lastkraftwagen (6) nacheinander über die Straße (2) an die Plattform (5) heranfahren und jeweils wenigstens einen Ladungsträger (1) in einer Richtung quer zur Längserstreckung (L) der Plattform (5) an mit den zu beladenden Stellen des Zugs (8) korrespondierende Abschnitte (11) der Plattform (5) übergeben werden,
- bei dem die von den Lastkraftwagen (6) an die Plattform (5) übergebenen Ladungsträger (1) an den mit den zu beladenden Stellen des Zugs (8) korrespondierenden Abschnitten (11) der Plattform (5) bis zum Heranfahren des Zugs (8) zwischengespeichert werden,
- bei dem der Zug (8) an die Plattform (5) herangefahren und neben der Plattform (5) angehalten wird,
- bei dem die zwischengespeicherten Ladungsträger (1) in einer Richtung quer zur Längserstreckung (L) der Plattform (5) jeweils an für die Beladung durch Ladungsträger (1) vorgesehene Stellen des Zugs an den angehaltenen Zug (8) übergeben werden.

2. Verfahren nach Anspruch 1,
- bei dem in der Beladestation (4,17,20) zu beiden Seiten des Gleises jeweils eine Plattform (5) zum Zwischenspeichern von einer Reihe von Ladungsträgern (1) in Längsrichtung (L) der Plattform (5) vorgesehen ist und
- bei dem, vorzugsweise, zu den dem Gleis (7) abgewandten Seiten der Plattformen (5) eine Straße (2) zum Heranfahren von Lastkraftwagen (6) vorgesehen ist.

3. Verfahren nach Anspruch 2,
- bei dem eine Mehrzahl von Lastkraftwagen (6) nacheinander über die Straßen (2) an die Plattformen (5) heranfahren und jeweils wenigstens einen Ladungsträger (1) in einer Richtung quer zur Längserstreckung (L) der zugeordneten Plattform (5) an mit den zu beladenden Stellen des Zugs (8) korrespondierende Abschnitte (11) der Plattformen (5) übergeben werden,
- bei dem die von den Lastkraftwagen (6) an die Plattformen (5) übergebenen Ladungsträger (1) an den mit den zu beladenden Stellen des Zugs (8) korrespondierenden Abschnitten (11) der Plattformen (5) bis zum Heranfahren des Zugs (8) zwischengespeichert werden,
- bei dem der Zug (8) an die Plattform (5) herangefahren und neben den Plattformen (5) angehalten wird,
- bei dem die zwischengespeicherten Ladungsträger (1) in einer Richtung quer zur Längserstreckung (L) der zugeordneten Plattform (5) jeweils an für die Beladung durch Ladungsträger (1) vorgesehenen Stellen des Zugs an den angehaltenen Zug (8) übergeben werden.

4. Verfahren nach einem der Ansprüche 1 bis 3,
- bei dem die Breite der wenigstens einen Plattform (5) quer zur Längserstreckung (L) der Plattform (5) korrespondierend zu wenigstens im Wesentlichen der Breite der Ladungsträger (1) gewählt wird und/oder
- bei dem die Übergabe der auf wenigstens einer Plattform (5) zwischengespeicherten Ladungsträger (1) in einer Richtung quer zur Längserstreckung (L) der wenigstens einen Plattform (5) jeweils an für die Beladung durch Ladungsträger (1) vorgesehenen Stellen des Zugs (8) wenigstens im Wesentlichen gleichzeitig an den Zug (8) übergeben werden.

5. Verfahren nach einem der Ansprüche 1 bis 4,
- bei dem der mit Ladungsträgern (1) an vorbestimmten Stellen zu beladende Zug (8) in einer Entladestation (19) umfassend wenigstens eine Plattform (5) zum Zwischenspeichern von Ladungsträgern (1), wenigstens ein Gleis (7) zum Heranfahren des Zugs (8) auf einer Seite der Plattform (5) und wenigstens eine Straße (2) zum Heranfahren von Lastkraftwagen (6) auf der anderen Seite der Plattform (5) angehalten wird und
- bei dem die zum Entladen vorgesehenen Ladungsträger (1) an der Entladestation (19) jeweils in einer Richtung quer zur Längserstreckung (L) der Plattform (5) an die Plattform (5) übergeben werden.

6. Verfahren nach Anspruch 5,
- bei dem der Zug (8) vor dem Heranfahren an die Beladestation (18) in der Entladestation (19) zum Entladen der zum Entladen vorgesehenen Ladungsträger (1) an der Plattform (5) angehalten wird.

7. Verfahren nach Anspruch 5 oder 6,
- bei dem die an der Entladestation (19) von dem Zug (8) an die Plattform (5) übergebenen Ladungsträger (1) nacheinander in einer Richtung quer zur Längserstreckung (L) der Plattform (5) an einer Mehrzahl von Lastkraftwagen (6) übergeben werden und
- bei dem, vorzugsweise, wenigstens ein in der Entladestation (19) von einem Lastkraftwagen (6) übernommener Ladungsträger (1) zur Beladestation (18) gefahren und in der Beladestation (18) als ein von einem anderen Zug (8) zu übernehmender Ladungsträger (1) in einer Richtung quer zur Längserstreckung (L) der Plattform (5) der Beladestation (18) an die Plattform (5) der Beladestation (18) übergeben wird.

8. Verfahren nach einem der Ansprüche 5 bis 7,
- bei dem in der Entladestation (19) zu beiden Seiten des Gleises jeweils eine Plattform (5) zum Zwischenspeichern von einer Reihe von Ladungsträgern (1) in Längsrichtung (L) der Plattform (5) vorgesehen ist und
- bei dem, vorzugsweise, zu den dem Gleis (7) abgewandten Seiten der Plattformen (5) eine Straße (2) zum Heranfahren von Lastkraftwagen (6) vorgesehen ist.

9. Verfahren nach Anspruch 8,
- bei dem die zum Entladen vorgesehenen Ladungsträger (1) an der Entladestation (19) jeweils in einer Richtung quer zur der Längserstreckung (L) der zugehörigen Plattform (5) an die Plattformen (5) übergeben werden und
- bei dem die an der Entladestation (19) von dem Zug (8) an die Plattformen (5) übergebenen Ladungsträger (1) nacheinander in einer Richtung quer zur Längserstreckung (L) der zugeordneten Plattform (5) an eine Mehrzahl von Lastkraftwagen (6) übergeben werden.

10. Verfahren nach einem der Ansprüche 5 bis 9,
- bei dem in der Entladestation (19) zum Beladen vorgesehene Ladungsträger (1) von wenigstens einem Lastkraftwagen (6) an die wenigstens eine Plattform (5) herangefahren und in einer Richtung quer zur Längserstreckung (L) der zugehörigen Plattform (5) an die zugehörige Plattform (5) übergeben werden und
- bei dem die zum Beladen vorgesehenen und an die wenigstens eine Plattform (5) in der Entladestation (19) übergebenen Ladungsträger (1) in einer Richtung quer zur Längserstreckung (L) der wenigstens einen Plattform (5) an den in der Entladestation (19) angehaltenen Zug (8) übergeben werden.

11. Verfahren nach einem der Ansprüche 1 bis 10,
- bei dem in der Beladestation (20) zwei Gleise zum Heranfahren jeweils eines Zugs (8) und zwischen den Gleisen eine Plattform (5) vorgesehen ist,
- bei dem, vorzugsweise, auf den der Plattform (5) zwischen den beiden Gleisen abgewandten Seiten der beiden Gleise jeweils eine Plattform (5) vorgesehen ist und
- bei dem, weiter vorzugsweise, an den den beiden Gleisen abgewandten Seiten der seitlich der Gleise vorgesehenen Plattformen (5) jeweils eine Straße (2) zum Heranfahren von Lastkraftwagen (6) vorgesehen ist.

12. Verfahren nach einem der Ansprüche 5 bis 11,
- bei dem in der Entladestation (19) zum Beladen vorgesehene Ladungsträger (1) von einem Zug (8) an die wenigstens eine Plattform (5) herangefahren und in einer Richtung quer zur Längserstreckung (L) der zugehörigen Plattform (5) an die zugehörige Plattform (5) übergeben werden und
- bei dem die zum Beladen vorgesehenen und von dem Zug (8) an die wenigstens eine Plattform (5) übergebenen Ladungsträger (1) in der Entladestation (19) in einer Richtung quer zur Längserstreckung (L) der wenigstens einen Plattform (5) an einen nachfolgend in der Entladestation (19) angehaltenen Zug (8) übergeben werden.

13. Verfahren nach einem der Ansprüche 1 bis 12,
- bei dem in der Entladestation (19) zwei Gleise zum Heranfahren jeweils eines Zugs (8) und zwischen den Gleisen eine Plattform (5) vorgesehen ist,
- bei dem, vorzugsweise, auf den der Plattform (5) zwischen den beiden Gleisen abgewandten Seiten der beiden Gleise jeweils eine Plattform (5) vorgesehen ist und
- bei dem, weiter vorzugsweise, an den den beiden Gleisen abgewandten Seiten der seitlich der Gleise vorgesehenen Plattformen (5) jeweils eine Straße (2) zum Heranfahren von Lastkraftwagen (6) vorgesehen ist.

14. Verfahren nach einem der Ansprüche 1 bis 13,
- bei dem in der Beladestation (4,17,18,20) zum Beladen vorgesehene Ladungsträger (1) von einem Zug (8) an die wenigstens eine Plattform (5) herangefahren und in einer Richtung quer zur Längserstreckung (L) der zugehörigen Plattform (5) an die zugehörige Plattform (5) übergeben werden und
- bei dem die zum Beladen vorgesehenen und von dem Zug (8) an die wenigstens eine Plattform (5) übergebenen Ladungsträger (1) in der Beladestation (4,17,18,20) in einer Richtung quer zur Längserstreckung (L) der wenigstens einen Plattform (5) an einen nachfolgend in der Beladestation (4,17,18,20) angehaltenen Zug (8) übergeben werden.

15. Verfahren nach einem der Ansprüche 5 bis 14,
- bei dem sich die wenigstens eine Plattform (5) in der Längserstreckung (L) der Plattform (5), insbesondere alle Plattformen (5) in der Längserstreckung (L) der jeweiligen Plattform (5), durchgehend von der Entladestation (19) zur Beladestation (18) oder umgekehrt erstrecken und/oder
- bei dem sich das wenigstens eine Gleis (7) und die wenigstens eine Straße (2) entlang der Längserstreckung (L) der wenigstens einen Plattform (5) durchgehend von der Entladestation (19) zur Beladestation (18) oder umgekehrt erstrecken.
